# EUROPEAN PATENT APPLICATION

(11) **EP 0 637 572 A1**
(43) Date of publication of application: **08.02.1995**
(21) Application number: 94305810.7
(22) Date of filing: 05.08.1994
(51) Int. Cl.: C03C 17/34, E06B 3/66

(54) **Coated sheet glass and insulated glazing units**

(30) Priority: 05.08.1993 GB 9316228
(71) Applicant: CARADON EVEREST LIMITED, Cuffley, Potters Bar, Hertfordshire EN6 4YA (GB)
(72) Inventor: Hinett, Graham Bverley, Reading, Berks. RG8 7QL (GB); Deans, John Graham, Herts. AL9 5DS (GB); McCarthy, Victor John, Herts. CM23 2PS (GB)
(74) Representative: Wain, Christopher Paul

(57) **Abstract**

Sheet glass (1) is provided with two low emissivity coatings (10,11) to provide lower heat transmission characteristics. The glass can be used in insulated glazing units. Preferably, one coating (10) is a hard coating and the other coating (11) is on the other surface of the glass sheet (1) and is a sputter coating.

## Description

This invention relates to coated sheet glass and to insulated glazing units containing such sheet glass.

Insulated glazing units (sometimes called sealed double glazing units) comprise two sheets of glass spaced in face-to-face relation and hermetically sealed in a frame, the gap between the sheets being small and usually containing dry air or another gas. The principal feature of these units is that they have a much lower "U" factor (heat transmission factor) than a single sheet of glass and yet can be fixed in a window or door frame in essentially the same way. The heat-loss characteristics of these units can be further improved by using, for one of the glass sheets, a sheet having a low emissivity coating thereon. Sheet glass having a low emissivity coating thereon is commercially available (e.g. Pilkington "K" float glass). One such coating is formed by directing a reactant gas against the exposed surface of the glass sheet as it is formed in the float process (see GB-A-2227754 and 1507996). In such glass, the coating is hard and pyrolytic, and can only be formed on one side of the sheet. Another way of making low emissivity glass is to coat a sheet of glass by cathode sputtering targets containing various metals such as indium and tin (GB-A-2116590, 2138026 and EP 0229921). The coatings formed in this way are relatively soft and are only formed on one side of the sheet. A further way of making low emissivity coatings on glass is to coat the glass with a powder and then heat to react. This is not a very satisfactory technique since it is difficult to avoid uneven coating thicknesses.

Insulated glazing units are known which contain one sheet of a low-emissivity coated glass. The coating is most preferably positioned inside the unit (i.e. on one of the inward-facing glass surfaces), preferably on the sheet which is towards the inside of the building in which the unit is mounted. It is also known to provide a second coating on a sheet of low emmisivity glass, in order to provide other effects. For example, GB-A-2097456 describes glass with a low emissivity coating on one face and a solar control coating on the other face.

In recent times, there has been a requirement to provide glass units of even lower "U" value than previously. In response to this, thicker low emissivity coatings have been employed, usually comprising silver. The use of these thicker coatings has lowered the "U" values of glazing units, but at the same time it has reduced the light transmission. This is usually undesirable since it is then necesaaary to use more lighting within the room containing the glazing unit, and the lighting itself generates heat and is costly.

We have now found a way of dealing with this problem whereby insulated glazing units can be made with a "U" value as low as about 1.1 to 1.2 (using an inert gas in the gap between the glass sheets) without any undue loss of light transmission. In particular, we have found that very much improved heat transmission characteristics can be obtained by providing two separate low emissivity coatings on one of the glass sheets of an insulated glazing unit.

According to one aspect of the present invention, there is provided an insulated glazing unit which comprises two separate low emissivity coatings on one of the glass sheets of the unit.

The two separate low emissivity coatings are formed on opposite faces of one of the glass sheets. The two coatings can in principle be of the same type (i.e. both hard, or both soft) but this is difficult to achieve satisfactorily by present technology. Also, it is not usually desirable to have a soft coating on external surface of a unit because of the possibility of damage and the risk of deterioration of certain coatings by oxidation.

It is therefore preferred that the two coatings be of different types. This can be achieved, in accordance with a feature of this invention, by putting a soft layer on the uncoated surface of a sheet of glass already having a hard coating on its other surface. This arrangement is especially preferred and gives excellent results.

Sheet glass having a low emissivity coating on both its surfaces is novel and constitutes a further aspect of the present invention per se.

In the preferred insulated glazing units of the invention, the double coated glass sheet will form the inner sheet (where appropriate) when the unit is installed in a building or the like. Preferably, the exposed outer face of the coated sheet will have a hard low emissivity coating thereon, and the coating on the other face will be of the soft variety. Double coated glass of this type is made, in accordance with a further aspect of the present invention, by sputter depositing the soft low emissivity coating on to the uncoated surface of a sheet of glass having a hard coating on the other face. This is possible without damage to the hard coating.

In a further arrangement of the present invention, the other sheet of glass can also have a low emissivity coating thereon.

The invention has been described with reference to insulated glazing units which are principally useful for windows and external doors in buildings. However, they also have other uses, for example in refrigerators, where the gas in the units can be, for example, sulphur dioxide.

In the units of the invention, the optical transmission is preferably maintained high to ensure good through-visibility.

The ways in which insulated glazing units are made, by hermetically sealing two sheets of glass together with a small gap therebetween, are known in the art and will not be further described herein. The units of the present invention can be made by this standard technology.

The provision of low emissivity coatings on glass sheets is also well known in the art, and coated sheets especially those having a hard pyrolytic coating, are commercially available (e.g. Pilkington "K" glass). Sputter depositing (cathodic evaporation) of the softer type of low emissivity coatings is also known. Such coatings are normally made by depositing several layers of materials to build up the coating. Two examples of such coatings are:

| Standard | Approx. thickness |
|---|---|
| tin oxide | 300 A |
| silver | 35 A |
| aluminium | 35 A |
| tin oxide | 300 A |
| Total resistance: | 10 ohms/square |

| High performance | Approx. thickness |
|---|---|
| tin oxide | 300 A |
| silver | 100 A |
| aluminium | 35 A |
| tin oxide | 300 A |
| Total resistance: | 2.5 ohms/square |

These coatings, which contain silver, need to be shielded from air to prevent oxidation (and darkening). The units including such coatings can be filled with an inert gas such as argon.

The low emissivity coatings used in the present invention are such that low emissivity is the principal or only major effect of the coatings.

In order that the invention may be more fully understood, reference is made to the accompanying schematic drawings, wherein:
Fig.1A is a front elevational view of an embodiment of a sealed unit of the invention;
Fig.1B is a section on the line A-A of Fig 1A;
Figs. 2 and 3 are sectional views similar to that of Fig 1B but omitting frame and sealant, of units as follows:

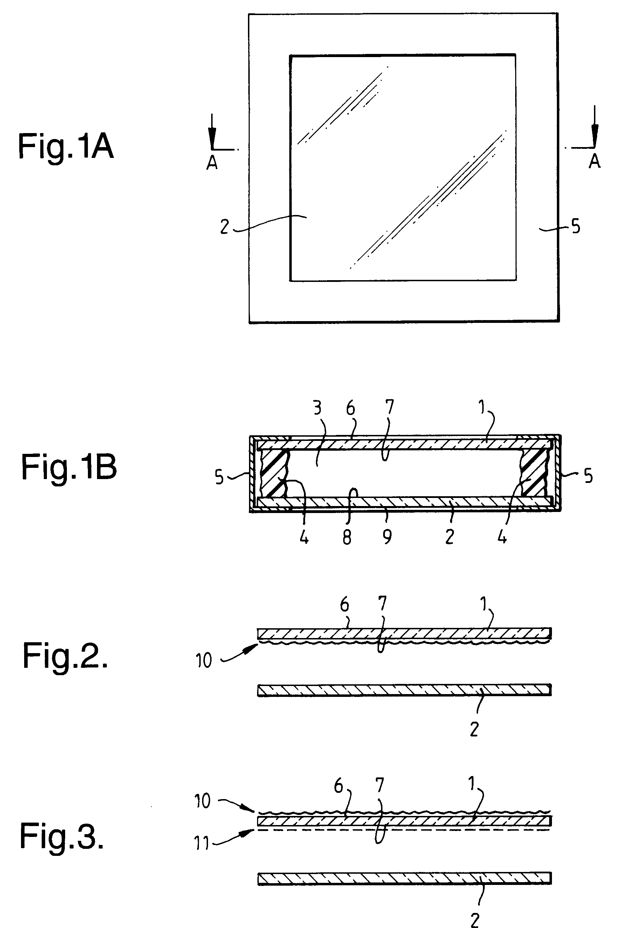

Fig. 2 is of a unit of the prior art;
Fig. 3 is an embodiment of the present invention.

Referring to the drawings, Figs. 1A and 1B show two sheets of glass 1 and 2 mounted face-to-face with a space 3 therebetween. The space 3 is closed by a sealant 4 which extends around the periphery of each sheet and makes space 3 hermetically sealed. Around the outside of the unit is a frame 5 which may be self-supporting or may merely be a strip of flexible material covering the edges of the sheets of glass. Space 3 may contain dry air or another gas. The four faces 6,7,8 and 9 of the two sheets of glass 1,2 will carry at least two separate low emissivity layers (not shown in Figs. 1A and 1B) to be described later.

For simplicity. in Figs 2 and 3 the same numbering is used as in Figs. 1A and 1B to indicate like parts. In Fig. 2, a single hard low emissivity coating 10 is provided on inner surface 7 of sheet 1. When used in a building or the like, sheet 1 of the unit will normally be on the inside of the building (this also applies to Figs. 3 to 5).

In Fig. 3, there are two low emissivity coatings, viz a hard coating 10 on the outside surface 6 of sheet 1, and a soft coating 11 on its inner surface 7. Sheet 2 remains uncoated.

Other embodiments are also possible as will be clear to the man skilled in the art.

## Claims

1. An insulated glazing unit which comprises two glass sheets (1,2) held in spaced facing relationship, one sheet (1) having a first low emissivity coating (10) on one surface (7) thereof, characterised in that said one sheet (1) also has a second low emissivity coating (11) thereon.

2. A unit according to claim 1, wherein the two low emissivity coatings (10,11) are on opposite sides of the said sheet (1).

3. A unit according to claim 1 or 2, wherein one coating (10) is a hard coating and the other (11) is a sputter coating.

4. A unit according to claim 3, wherein the hard coating is on an outer surface of the unit.

5. Sheet glass (1) having a low emissivity coating (10,11) on both its surfaces (6,7).

6. Sheet glass according to claim 5, wherein one coating (10) is of hard material and the other (11) is a sputter coating.

7. A method of making sheet glass as claimed in claim 6, which comprises sputter depositing one coating on to the uncoated surface of a sheet of glass which has the hard coating on its other surface.
